# EUROPÄISCHE PATENTSCHRIFT

(11) **EP 0 639 728 B1**
(45) Veröffentlichungstag und Bekanntmachung des Hinweises auf die Patenterteilung: **11.12.1996**
(21) Anmeldenummer: 94103962.0
(22) Anmeldetag: 15.03.1994
(51) Int. Cl.: F16F 15/12, F16H 55/36

(54) **Ringförmiges Maschinenteil und Verfahren zu dessen Herstellung**
Ring shaped machine tool part and method of making same
Pièce annulaire pour machine-outil et procédé de sa fabrication

(30) Priorität: 21.08.1993 DE 4328153
(43) Veröffentlichungstag der Anmeldung: 22.02.1995
(73) Patentinhaber: Firma Carl Freudenberg, D-69469 Weinheim (DE)
(72) Erfinder: Hamaekers, Arno, D-69517 Gorxheimertal-Unterflockenbach (DE)

(56) Entgegenhaltungen:
- EP-A- 0 298 428
- EP-A- 0 477 146
- DE-A- 3 428 894
- FR-A- 2 319 804
- FR-A- 2 611 846

## Beschreibung

Die Erfindung betrifft ein ringförmiges Maschinenteil, umfassend zumindest zwei durch eine Gummischicht voneinander getrennte, metallische Maschinenelemente mit sich im wesentlichen parallel zueinander erstreckenden Oberflächen, wobei zumindest eines der Maschinenelemente mit einem separat erzeugten Ansatz verbunden ist.

Ein solches Maschinenteil ist aus der DE-A-3 428 894 bekannt. Das ringförmige Maschinenteil ist als Schwingungsdämpfer zur Dämpfung von rotierenden Massen ausgebildet, bei dem am Schwungring, der das Sekundärteil bildet, eine Keilriemenscheibeneinheit zum Antrieb von Hilfsmaschinen vorgesehen ist. Die Aufgabe des vorbekannten Schwingungsdämpfers wird darin gesehen, daß dieser besser an verschiedene Einsatzfälle angepaßt werden kann. Dazu ist es vorgesehen, daß das Sekundärteil entsprechend seinen Funktionszwecken geteilt wird. Das Sekundärteil besteht aus einem Sekundärteilträger und einer Keilriemenscheibeneinheit und je nach Bedarf aus einer Zusatzmasse beziehungsweise einem zusätzlichen Schwungring.

Aus der EP-A-0 477 146 ist ebenfalls ein eingangs gennantes ringförmiges Maschinenteil bekannt, das in Form eines Schwingungsdämpfers aus einem Nabenteil und einem das Nabenteil mit radialem Abstand umschließenden Schwungring besteht, wobei in dem durch den Abstand gebildeten Spalt zwischen dem Nabenteil und dem Schwungring ein Federkörper aus gummielastischem Werkstoff angeordnet ist. Mit dem Nabenteil ist eine Riemenscheibe drehfest verbunden.

Aus der DE-OS 36 12 370 ist ein Schwingungsdämpfer bekannt, insbesondere für die Kurbelwelle einer Verbrennungskraftmaschine, wobei sowohl der Nabenring als auch der Schwungring aus einem tiefgezogenen Blechteil bestehen. Der Schwungring ist einstückig ineinanderübergehend ausgebildet und umfaßt eine Riemenscheibe und ein Geberrad mit gezahntem Außenumfang für eine elektrische/elektronische Meßvorrichtung. Dabei ist allerdings zu beachten, daß der gezogene Schwungring sowohl in fertigungstechnischer als auch in wirtschaftlicher Hinsicht wenig befriedigend ist. Die Herstellung maßhaltiger Schwungringe mit geringen Toleranzen, die sowohl eine exakte Führung des Riemens als auch eine genaue Abtastung, beispielsweise der Drehzahl des Schwingungsdämpfers ermöglichen, ist nur mit erheblichem Aufwand möglich.

Der Erfindung liegt die Aufgabe zugrunde, ein ringförmiges Maschinenteil der vorgenannten Art derart weiterzuentwickeln, daß das Bauteil vergleichsweise einfacher und kostengünstiger herstellbar ist.

Diese Aufgabe wird erfindungsgemäß mit den kennzeichnenden Merkmalen von Anspruch 1 gelöst. Auf vorteilhafte Ausgestaltungen nehmen die Unteransprüche Bezug.

Im Rahmen der vorliegenden Erfindung ist es vorgesehen, daß der Ansatz und/oder zumindest ein Maschinenelement reifenartig gestaltet und aus einem Stabmaterial erzeugt sind und daß das reifenartig gestaltete Stabmaterial in Umfangsrichtung durch Enden begrenzt ist, die aneinander festgelegt sind. Stabmaterial ist einfach und kostengünstig zu verarbeiten, beispielsweise in einer einzigen Werkzeugmaschine, die als Stanz-Biegemaschine ausgebildet ist. Die beiden Maschinenelemente, die durch die Gummischicht aufeinander abgestützt sind, können beispielsweise durch einen Nabenring und einen Schwungring gebildet sein. Der separat erzeugte Ansatz kann in diesem Fall zum Beispiel aus einer Riemenscheibe bestehen, die entweder an dem Schwungring oder am Nabenring befestigt ist. Sind die beiden Maschinenelemente beispielsweise durch einen Nabenring und eine Riemenscheibe gebildet, kann an der Riemenscheibe ein Ansatz in Form eines Schwungrings befestigt sein. Durch den separat erzeugten Ansatz kann dieses Bauteil den jeweiligen Gegebenheiten des Anwendungsfalles in optimaler Weise angepaßt werden. Die Verbindung zwischen dem Ansatz und einem der Maschinenelemente kann beispielsweise kraft- oder formschlüssig erfolgen. Der Ansatz kann beispielsweise mit dem angrenzenden Maschinenelement durch eine Preßpassung verbunden werden oder durch davon abweichende Befestigungsmaßnahmen.

Gemäß einer vorteilhaften Ausgestaltung kann der Ansatz ringförmig ausgebildet sein. Hierbei ist von Vorteil, daß rotationssymmetrische Bauteile die Gebrauchseigenschaften, wie beispielsweise einen einwandfreien Rundlauf der Maschinenteile begünstigen. Die Zuordnung des Ansatzes zu zumindest einem der Maschinenelemente erfolgt daher bevorzugt konzentrisch. Die relativ unbewegliche Zuordnung des Ansatzes zu einem der Maschinenelemente bedingt gleichbleibend gute Gebrauchseigenschaften während der gesamten Gebrauchsdauer.

Bevorzugt sind die Schwerpunkte der zur Anwendung gelangenden Maschinenelemente sowie des Ansatzes in einer Radialebene des ringförmigen Maschinenteils angeordnet.

Die Verbindung des Ansatzes mit einem der Maschinenelemente kann beispielsweise durch eine Verschweißung erfolgen. Die Verschweißung kann als Punktschweißung oder als Widerstandsimpulsschweißung ausgeführt sein. Bei derartigen Schweißverfahren ist von Vorteil, daß die Erwärmung der miteinander zu verschweißenden Teile örtlich begrenzt ist, so daß der Verzug der Bauteile vernachlässigbar gering bleibt und eine formgebende Nachbearbeitung im Anschluß an die Verbindung von einem der Maschinenelemente mit dem Ansatz entbehrlich ist. Der Vorteil einer Verschweißung ist im Gegensatz zum Aufpressen des Ansatzes auf eines der Maschinenelemente darin zu sehen, daß das Herstellungsverfahren vereinfacht ist. Es ist nicht erforderlich die beiden miteinander zu verbindenden Teile vor ihrer Vereinigung einer voneinander abweichenden Wärmebehandlung zu unterziehen, um diese miteinander verbinden zu können. Eine Verschweißung kann maschinell in Großserie kostengünstig erfolgen.

Zur Herstellung einer formschlüssigen Verbindung kann eines der Enden des Stabmaterials beispielsweise mit einem sich in Umfangsrichtung erstreckenden Vorsprung versehen sein, der in eine kongruent geformte Ausnehmung des in Umfangsrichtung gegenüberliegenden Endes formschlüssig eingreift

Nach einer anderen Ausgestaltung kann das Stabmaterial in Umfangsrichtung durch Enden begrenzt sein, die miteinander verschweißt sind. Hierbei ist von Vorteil, daß Belastungen, unabhängig von der Belastungsrichtung, die Haltbarkeit der Verbindung nicht beeinträchtigen. Sowohl fliehkraftbedingte, radiale Belastungen als auch eventuell auftretende Axialbelastungen und/oder Taumelbewegungen können von der Schweißverbindung problemlos aufgenommen werden.

Außerdem betrifft die Erfindung ein Verfahren zur Herstellung eines ringförmigen Maschinenteils nach einem der Ansprüche 9 bis 13. Die Gummischicht und die Maschinenelemente können durch Vulkanisation miteinander verbunden werden oder die Gummischicht kann zwischen die beiden Maschinenelemente eingeschossen werden.

Um Zugspannungen innerhalb der Gummischicht zu vermeiden, kann zumindest eines der Maschinenelemente vor seiner Verbindung mit dem Ansatz kalibriert werden. Dadurch wird bewirkt, daß gebrauchsdauerverringernde Zug-/Schubspannungen innerhalb der Gummischicht ausgeschlossen sind und das Maschinenteil gleichbleibend gute Gebrauchseigenschaften während einer langen Gebrauchsdauer aufweist.

Das Maschinenelement und/oder der Ansatz können vor ihrer gegenseitigen Verbindung spanabhebend bearbeitet werden. Hierbei ist von Vorteil, daß in Abhängigkeit von dem Verbindungsverfahren der Maschinenelemente mit dem Ansatz eine angepaßte Oberflächenrauigkeit der einander zugewandten Oberflächen von Maschinenelement und Ansatz erzeugt werden können. Eine derartige spanabhebende Bearbeitung, die eine vergleichsweise große Oberflächenrauigkeit bedingt, bietet sich insbesondere dann an, wenn das Maschinenelement und der Ansatz beispielsweise miteinander verklebt werden. Die Oberflächenrauigkeit bewirkt eine gut, haltbare Verbindung des Klebstoffs mit den angrenzenden Bauteilen.

Zur Herstellung des Maschinenelements und des Ansatzes können metallische Werkstoffe verwendet werden, wie beispielsweise Gußeisen und Stahl, wobei diese Werkstoffe durch ein Widerstandsimpulsschweißverfahren miteinander verbunden werden können. Für ein derartiges Schweißverfahren ist von Vorteil, daß die Kontaktfläche zwischen den beiden miteinander zu verschweißenden Bauteilen möglichst klein, beispielsweise punkt- oder linienförmig ist. Im Bereich dieser Verbindungsstellen ergibt sich, örtlich weitgehend auf diesen Bereich begrenzt, eine derart hohe Temperatur, daß die Vorsprünge vom festen in den flüssigen Aggregatzustand übergehen und mit dem Werkstoff des angrenzenden Bauteils verschweißen. Durch die örtlich begrenzte Wärmezufuhr in die zu verschweißenden Bauteile kann Verzug zuverlässig ausgeschlossen werden. Eine verzug-bedingte Nachbearbeitung ist daher nicht erforderlich, was hinsichtlich einer einfachen und kostengünstigen Fertigung des Maschinenteils von hervorzuhebender Bedeutung ist.

Das Maschinenelement und der Ansatz können vor ihrer gegenseitigen Verbindung hinsichtlich der Oberflächengüte bearbeitet werden. Dadurch ist eine an die jeweilige Art der Verbindung angepaßte Oberflächenrauigkeit zu erzielen, um einen möglichst haltbaren Verbund zu erzielen.

Zwei Ausführungsbeispiele des erfindungsgemäßen Maschinenteils werden nachfolgend anhand der beigefügten Fig. 1 bis 3 näher erläutert.

In den Fig. 1 und 2 sind die zu berücksichtigenden Einzelteile schematisch und in quergeschnittener Darstellung gezeigt.

Fig. 3 zeigt das erste Maschinenelement aus Fig. 2 in einer Ansicht.

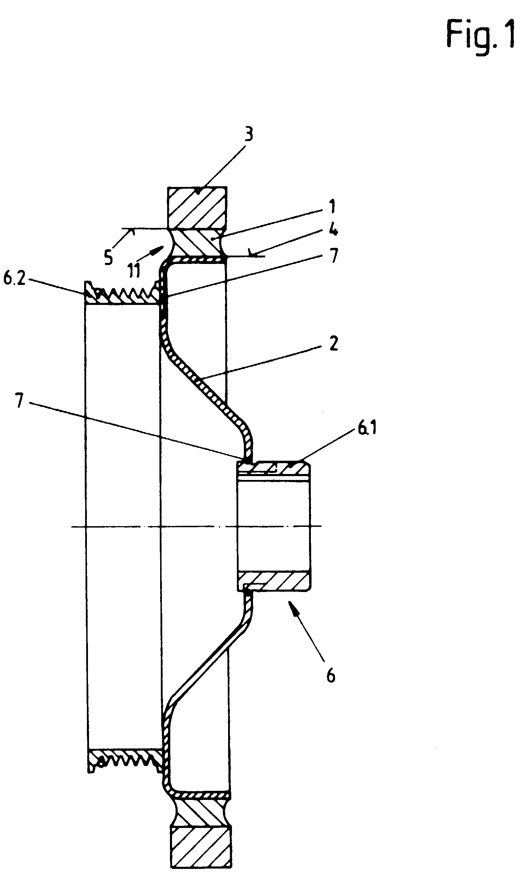

In Fig. 1 ist ein ringförmiges Maschinenteil gezeigt, das als Torsionsschwinungsdämpfer ausgebildet ist. Die beiden metallischen Maschinenelemente 2, 3 sind durch einen Nabenring und einen Schwungring gebildet, die durch eine Gummischicht 1 drehelastisch aufeinander abgestützt sind. Die Gummischicht 1 ist in diesem Ausführungsbeispiel radial innen- und außenseitig gehaftet an sich parallel zueinander erstreckenden Oberflächen 4, 5 der beiden Maschinenelemente 2, 3 festgelegt. Das ringförmige Maschinenteil ist in diesem Ausführungsbeispiel mit zwei Ansätzen 6.1, 6.2 versehen, wobei der erste Ansatz 6.1 eine Hülse bildet, die drehfest auf einer Welle befestigbar ist. Der zweite Ansatz, der ebenfalls am ersten Maschinenelement 2 angeordnet ist, ist durch eine Riemenscheibe gebildet. Sowohl der erste als auch der zweite Ansatz 6.1, 6.2 sind durch eine als Widerstandsimpulsschweißung ausgeführte Verschweißung am ersten Maschinenelement 2 befestigt. Das zweite Maschinenelement 2 weist vor seiner Verbindung mit dem ersten Ansatz 6.1 innenumfangsseitig eine Begrenzungsfläche auf, die den ersten Ansatz 6.1 im wesentlichen linienförmig berührt. Während der Verschweißung schmilzt der sich kegelig in Richtung des ersten Ansatzes 6.1 verjüngende Vorsprung des ersten Maschinenelements 2 ab und verbindet sich mit dem Werkstoff der Hülse. Als Werkstoff können beispielsweise ST 37 und C 45 zur Anwendung gelangen. Entsprechend ist der als Riemenscheibe ausgebildete zweite Ansatz 6.2 am ersten Maschinenelement 2 befestigt, wobei die Riemenscheibe im Bereich ihrer axialen Stirnfläche mit der sich in radialer Richtung erstreckenden Stirnfläche des ersten Maschinenelements 2 verbunden ist.

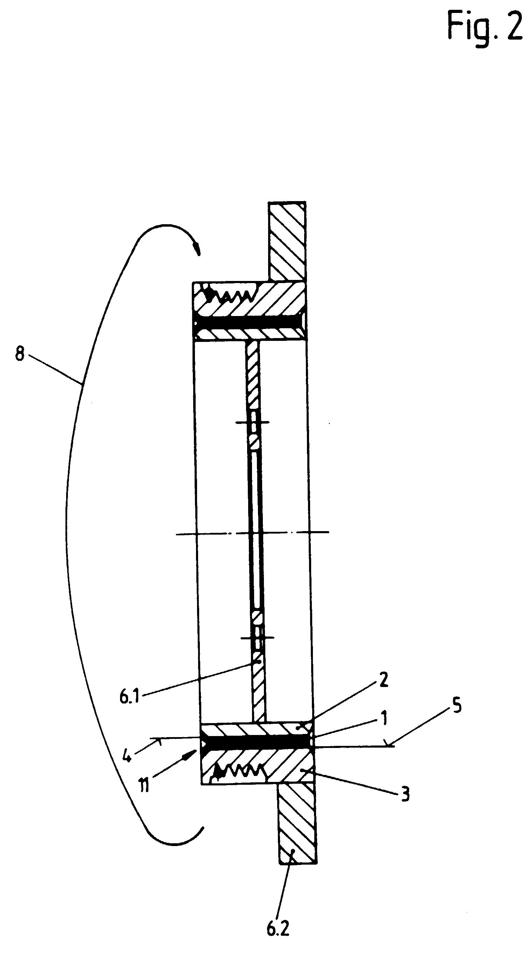

In Fig. 2 ist ein zweites Ausführungsbeispiel gezeigt, das im wesentlichen aus vier miteinander verbundenen Einzelteilen besteht. Das in radialer Richtung innenliegende Maschinenelement 2 ist kreisringförmig ausgebildet und außenseitig von einem zweiten Maschinenelement 3, das als Riemenscheibe ausgebildet ist, mit radialem Abstand umschlossen. Der Zwischenraum 11 zwischen den beiden Maschinenelementen 2, 3 ist zur Dämpfung von Torsionsschwingungen mit einer Gummischicht 1 ausgefüllt. Auch in diesem Ausführungsbeispiel sind zwei separat erzeugte Ansätze 6.1, 6.2 vorgesehen, wobei der erste Ansatz 6.1 zur Befestigung des Maschinenteils beispielsweise an der Kurbelwelle einer Verbrennungskraftmaschine vorgesehen ist sowie einen Teil des Nabenrings bildet und der zweite Ansatz 6.2 als Schwungring außenumfangsseitig auf das zweite Maschinenelement 3 aufgepreßt ist.

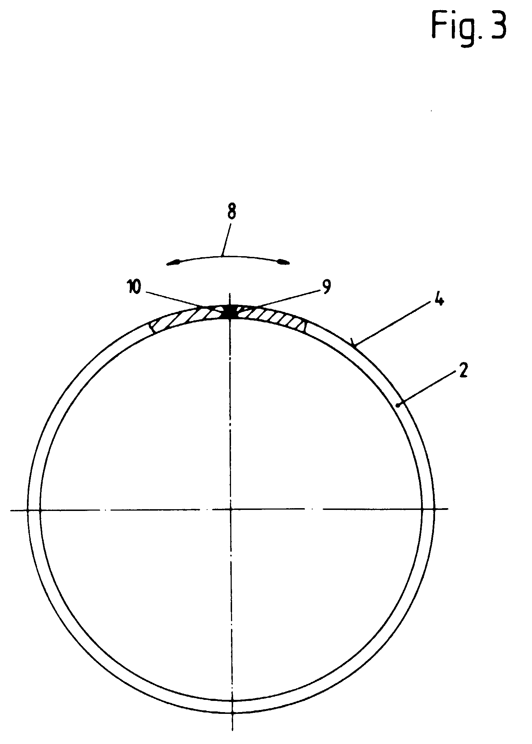

In Fig. 3 ist das erste Maschinenelement 2 aus Fig. 2 gezeigt. Das Maschinenelement 2 ist reifenartig ausgebildet und aus einem Stabmaterial erzeugt. Es ist in Umfangsrichtung 8 durch Enden 9, 10 begrenzt, die miteinander verschweißt sind.

## Patentansprüche

1. Ringförmiges Maschinenteil, umfassend zumindest zwei durch eine Gummischicht (1) voneinander getrennte, metallische Maschinenelemente (2, 3) mit sich im wesentlichen parallel zueinander erstreckenden Oberflächen (4, 5), wobei zumindest eines der Maschinenelemente (2, 3) mit einem separat erzeugten Ansatz (6) verbunden ist, dadurch gekennzeichnet, daß der Ansatz (6) und/oder zumindest ein Maschinenelement (2, 3) reifenartig gestaltet und aus einem Stabmaterial erzeugt sind und daß das reifenartig gestaltete Stabmaterial in Umfangsrichtung durch Enden (9, 10) begrenzt ist, die aneinander festgelegt sind.

2. Maschinenteil nach Anspruch 1, dadurch gekennzeichnet, daß der Ansatz (6) ringförmig ausgebildet ist.

3. Maschinenteil nach Anspruch 2, dadurch gekennzeichnet, daß der Ansatz (6) zumindest einem der Maschinenelemente (2, 3) konzentrisch zugeordnet ist.

4. Maschinenteil nach einem der Ansprüche 1 bis 3, dadurch gekennzeichnet, daß der Ansatz (6) und das Maschinenelement (2, 3) durch eine Verschweißung (7) verbunden sind.

5. Maschinenteil nach Anspruch 4, dadurch gekennzeichnet, daß die Verschweißung (7) als Punktschweißung ausgeführt ist.

6. Maschinenteil nach Anspruch 4, dadurch gekennzeichnet, daß die Verschweißung (7) als Widerstandsimpulsschweißung ausgeführt ist.

7. Maschinenteil nach einem der Ansprüche 1 bis 6, dadurch gekennzeichnet, daß die Enden (9, 10) formschlüssig aneinander festgelegt sind.

8. Maschinenteil nach einem der Ansprüche 1 bis 6, dadurch gekennzeichnet, daß die Enden (9, 10) miteinander verschweißt sind.

9. Verfahren zur Herstellung eines ringförmigen Maschinenteils nach einem der Ansprüche 1 bis 8, bei dem in dem Zwischenraum (11) zwischen zwei voneinander getrennten, metallischen Maschinenelementen (2, 3) mit sich im wesentlichen parallel zueinander erstreckenden Oberflächen (4, 5) eine Gummischicht (1) eingefügt wird, wobei nach dem Einfügen der Gummischicht (1) zumindest eines der Maschinenelemente (2, 3) mit einem separat erzeugten Ansatz (6) verbunden wird, dadurch gekennzeichnet, der Ansatz (6) und/oder zumindest ein Maschinenelement (2, 3) reifenartig gestaltet und aus einem Stabmaterial erzeugt wird und daß das reifenartig gestaltete Stabmaterial in Umfangsrichtung durch Enden (9, 10) begrenzt ist, die aneinander festgelegt werden.

10. Verfahren nach Anspruch 9, dadurch gekennzeichnet, daß das Maschinenelement (2, 3) vor seiner Verbindung mit dem Ansatz (6) kalibriert wird.

11. Verfahren nach einem der Ansprüche 9 bis 10, dadurch gekennzeichnet, daß das Maschinenelement (2, 3) und/oder der Ansatz (6) vor der gegenseitigen Verbindung spanabhebend bearbeitet wird.

12. Verfahren nach einem der Ansprüche 10 bis 11, bei dem für die Herstellung des Maschinenelementes (2, 3) und des Ansatzes (6), metallische Werkstoffe verwendet werden, dadurch gekennzeichnet, daß die Werkstoffe durch ein Widerstandsimpulsschweißverfahren miteinander verbunden werden.

13. Verfahren nach einem der Ansprüche 9 bis 12, dadurch gekennzeichnet, daß das Maschinenelement (2, 3) und der Ansatz (6) vor ihrer gegenseitigen Verbindung hinsichtlich der Oberflächengüte bearbeitet werden.

## Claims

1. An annular machine part, comprising at least two metallic machine elements (2, 3) separated from one another by a rubber layer (1) and having surfaces (4, 5) extending essentially parallel to one another, at least one of the machine elements (2, 3) being connected to a separately produced extension (6), characterized in that the extension (6) and/or at least one machine element (2, 3) are configured like a tyre and are produced from bar stock, and in that the bar stock configured like a tyre is bounded in the peripheral direction by ends (9, 10) which are secured to one another.

2. A machine part according to claim 1, characterized in that the extension is of annular design.

3. A machine part according to claim 2, characterized in that the extension (6) is concentric with at least one of the machine elements (2, 3).

4. A machine part according to any one of claims 1 to 3, characterized in that the extension (6) and the machine element (2, 3) are connected by a welding (7).

5. A machine part according to claim 4, characterized in that the welding (7) is executed as spot welding.

6. A machine part according to claim 4, characterized in that the welding (7) is executed as pulsed resistance welding.

7. A machine part according to any one of claims 1 to 6, characterized in that the ends (9,10) are secured to one another in a positive-locking manner.

8. A machine part according to any one of claims 1 to 6, characterized in that the ends (9, 10) are welded to one another.

9. A method of making an annular machine part according to any one of claims 1 to 8, in which a rubber layer (1) is inserted in the intermediate space (11) between two metallic machine elements (2, 3) separated from one another and having surfaces (4, 5) extending essentially parallel to one another, at least one of the machine elements (2, 3) being connected to a separately produced extension (6) after the insertion of the rubber layer (1), characterized in that the extension (6) and/or at least one machine element (2, 3) is configured like a tyre and is produced from bar stock and in that the bar stock configured like a tyre is bounded in the peripheral direction by ends (9, 10) which are secured to one another.

10. A method according to claim 9, characterized in that the machine element (2, 3) is calibrated before it is connected to the extension (6).

11. A method according to either one of claims 9 to 10, characterized in that the machine element (2, 3) and/or the extension (6) are machined before they are connected to one another.

12. A method according to either one of claims 10 to 11, in which metallic materials are used for the production of the machine element (2, 3) and the extension (6), characterized in that the materials are connected to one another by a pulsed resistance welding process.

13. A method according to any one of claims 9 to 12, characterized in that the machine element (2, 3) and the extension (6) are machined with regard to the surface quality before they are connected to one another.

## Revendications

1. Pièce annulaire pour machine-outil, comprenant au moins deux éléments de machine métalliques (2, 3) séparés l'un de l'autre par une couche en caoutchouc (1) et pourvus de surfaces (4, 5) s'étendant essentiellement de manière parallèle l'une par rapport à l'autre, au moins un des éléments de machine (2, 3) étant relié à une pièce (6) produite séparément, caractérisée en ce que la pièce (6) et/ou au moins un élément de machine (2, 3) a/ont la forme d'un collier et est/sont fabriqué(e)s dans un matériau en barres, et en ce que le matériau en barres ayant la forme d'un collier est limité, dans la direction circonférentielle, par des extrémités (9, 10) qui sont fixées l'une sur l'autre.

2. Pièce pour machine-outil selon la revendication 1, caractérisée en ce que la pièce (6) a une forme annulaire.

3. Pièce pour machine-outil selon la revendication 2, caractérisée en ce que la pièce (6) est située de manière concentrique par rapport à au moins un des éléments de machine (2, 3).

4. Pièce pour machine-outil selon l'une des revendications 1 à 3, caractérisée en ce que la pièce (6) et l'élément de machine (2, 3) sont reliés par une soudure (7).

5. Pièce pour machine-outil selon la revendication 4, caractérisée en ce que la soudure (7) est réalisée sous forme d'un soudage par points.

6. Pièce pour machine-outil selon la revendication 4, caractérisée en ce que la soudure (7) est réalisée sous forme de soudage par résistance par pulsations.

7. Pièce pour machine-outil selon l'une des revendications 1 à 6, caractérisée en ce que les extrémités (9, 10) sont fixées l'une sur l'autre par conjugaison de forme.

8. Pièce pour machine-outil selon l'une des revendications 1 à 6, caractérisée en ce que les extrémités (9, 10) sont soudées l'une à l'autre.

9. Procédé de fabrication d'une pièce annulaire pour machine-outil selon l'une des revendications 1 à 8, dans lequel une couche en caoutchouc (1) est insérée dans l'espace intermédiaire (11) situé entre deux éléments de machine métalliques (2, 3) séparés l'un de l'autre et pourvus de surfaces (4, 5) s'étendant essentiellement de manière parallèle l'une par rapport à l'autre, au moins un des éléments de machine (2, 3) étant relié après l'insertion de la couche en caoutchouc (1) à une pièce (6) produite séparément, caractérisé en ce que la pièce (6) et/ou au moins un élément de machine (2, 3) a/ont la forme d'un collier et est/sont fabriqué(e)s dans un matériau en barres, et en ce que le matériau en barres ayant la forme d'un collier est limité, dans la direction circonférentielle, par des extrémités (9, 10) qui sont fixées l'une sur l'autre.

10. Procédé selon la revendication 9, caractérisé en ce que l'élément de machine (2, 3) est calibré avant son assemblage avec la pièce (6).

11. Procédé selon l'une des revendications 9 à 10, caractérisé en ce que l'élément de machine (2, 3) et/ou la pièce (6) est/sont usiné(e)s par enlèvement de copeaux avant l'assemblage réciproque.

12. Procédé selon l'une des revendications 10 à 11, dans lequel on utilise des matériaux métalliques pour la fabrication de l'élément de machine (2, 3) et de la pièce (6), caractérisé en ce que les matériaux sont reliés l'un à l'autre au moyen d'un procédé de soudage par résistance par pulsations.

13. Procédé selon l'une des revendications 9 à 12, caractérisé en ce que l'élément de machine (2, 3) et la pièce (6) sont usinés, avant leur assemblage réciproque, en vue de la qualité de leur surface.
